# EUROPEAN PATENT APPLICATION

(11) **EP 4 811 077 A1**
(43) Date of publication of application: **23.09.2026**
(21) Application number: 26703198.7
(22) Date of filing: 21.01.2026
(51) Int. Cl.: G06F 1/16

(54) **FOLDABLE ELECTRONIC DEVICE COMPRISING COVER MEMBER**

(30) Priority: 24.01.2025 KR 20250011013; 26.03.2025 KR 20250038903
(71) Applicant: Samsung Electronics Co., Ltd, Suwon-si, Gyeonggi-do 16677 (KR)
(72) Inventor: NAM, Hosang, Suwon-si, Gyeonggi-do 16677 (KP); LEE, Junhwan, Suwon-si, Gyeonggi-do 16677 (KP); LEE, Jaewoo, Suwon-si, Gyeonggi-do 16677 (KP); AN, Jungchui, Suwon-si, Gyeonggi-do 16677 (KP)
(74) Representative: HGF
(86) International application number: PCT/KR2026/001223
(87) International publication number: WO 2026/160835

(57) **Abstract**

A foldable electronic device according to embodiments may include a first housing, a second housing, a hinge assembly, a support plate, a flexible display and a cover member. The cover member may include a plurality of recesses formed to extend from a first side surface of the cover member to a second side surface which is opposite to the first side surface. Each of the plurality of openings of the support plate may be disposed to overlap at least one of the plurality of recesses, when viewed from a direction perpendicular to the support plate.

## Description

### [Technical Field]

The disclosure relates to a foldable electronic device including a cover member, and relates to the foldable electronic device including the cover member which covers a part of a support plate for supporting a flexible display.

### [Background Art]

A foldable electronic device which may be unfolded or folded has been developed and may include a flexible display which is bendable. Consequently, development of a support structure for preventing damage or deformation of the flexible display while the flexible display is bent has occurred.

The foregoing information may be provided as related art for the purpose of aiding understanding of the disclosure. No claim or determination is made as to whether any of the foregoing may be applied as the prior art in connection with the disclosure.

### [Disclosure of Invention]

### [Solution to Problem]

A foldable electronic device according to an embodiment of the disclosure may include a first housing. The foldable electronic device may include a second housing. The foldable electronic device may include a hinge assembly for rotatably connecting the first housing and the second housing. The foldable electronic device may include a support plate disposed to cross the hinge assembly and disposed in the first housing and the second housing. The support plate may include a first support portion, a second support portion and a central support portion interposed between the first support portion and the second support portion. The central support portion may include a plurality of openings formed to pass through the central support portion. The foldable electronic device may include a flexible display supported by the support plate. The foldable electronic device may include a cover member disposed between the hinge assembly and the support plate, and disposed to cover at least in part the central support portion. The cover member may include a plurality of recesses formed to extend from a first side surface of the cover member to a second side surface which is opposite to the first side surface. The plurality of openings each may be disposed to overlap at least one of the plurality of recesses, when viewed from a direction perpendicular to the support plate.

A foldable electronic device according to an embodiment of the disclosure may include a first housing. The foldable electronic device may include a second housing. The foldable electronic device may include a hinge assembly for rotatably connecting the first housing and the second housing. The foldable electronic device may include a support plate disposed to cross the hinge assembly and disposed in the first housing and the second housing. The support plate may include a first support portion, a second support portion and a central support portion interposed between the first support portion and the second support portion. The central support portion may include a plurality of openings formed to pass through the central support portion. The foldable electronic device may include a flexible display supported by the support plate. The foldable electronic device may include a cushioning member interposed between the hinge assembly and the support plate, and disposed to cover at least in part the central support portion. The foldable electronic device may include an adhesive member interposed between the cushioning member and the support plate, and disposed to cover the plurality of openings. The plurality of recesses may be formed on the cushioning member by the adhesive member.

### [Brief Description of Drawings]

FIG. 1 is a front perspective view of an electronic device according to an embodiment.
FIG. 2 is a rear perspective view of an electronic device according to an embodiment.
FIG. 3 is an exploded perspective view of a foldable electronic device according to an embodiment.
FIG. 4 is a front view of a support plate including a plurality of openings according to an embodiment.
FIG. 5 is a cross-sectional view of a flexible display, a support plate and a cover member according to an embodiment.
FIG. 6 is an exploded perspective view of a support plate and a cover member according to an embodiment.
FIG. 7 is a view illustrating a cover member including a plurality of recesses according to an embodiment.
FIG. 8 is a view illustrating a cushioning member and a second adhesive member of a cover member according to an embodiment.
FIG. 9 is a view illustrating a cover member disposed on a support plate according to an embodiment.
FIG. 10 is a view illustrating coupling of a support plate and a cover member according to an embodiment.
FIG. 11 is a view illustrating an example of a plurality of recesses formed in a cover member according to an embodiment.
FIG. 12 is a view illustrating an example of a plurality of recesses formed in a cover member according to an embodiment.
FIG. 13 is a view illustrating a cover member including a third adhesive member according to an embodiment.
FIG. 14 is a view illustrating an example of a plurality of recesses formed by a third adhesive member and a support plate according to an embodiment.
FIG. 15 is a view illustrating an example of a plurality of recesses formed by a third adhesive member and a support plate according to an embodiment.
FIG. 16 is a block diagram of an electronic device in a network environment according to an embodiment.

In relation to descriptions of the drawings, like or similar reference numerals may be used for like or similar components.

### [Mode for the Invention]

Hereinafter, various embodiments of the invention are described with reference to the accompanying drawings. However, this is not intended to limit the invention to any particular embodiment and is to be understood to include various modifications, equivalents, and/or alternatives of the embodiments of the invention.

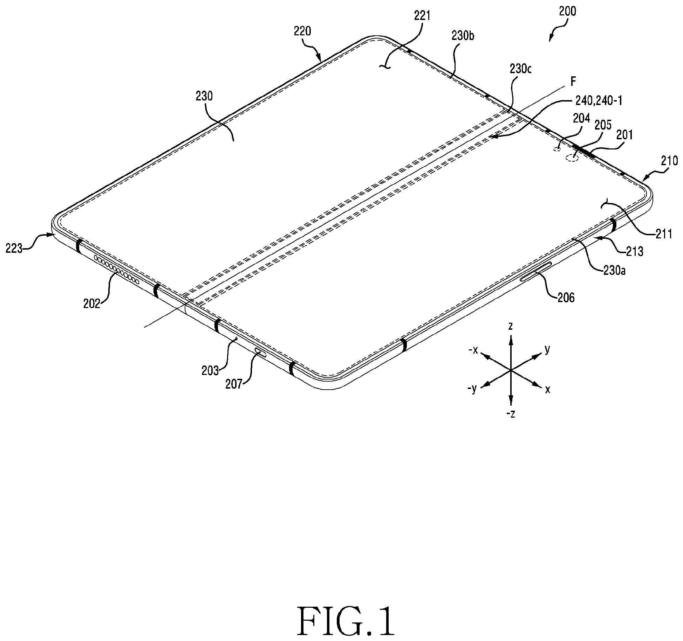

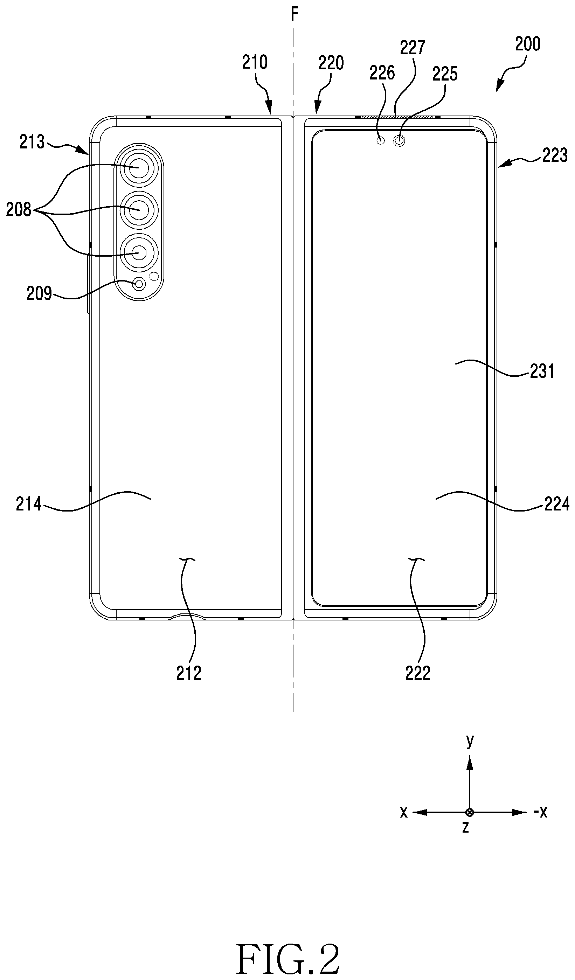

FIG. 1 is a front perspective view of an electronic device according to an embodiment. FIG. 2 is a rear perspective view of an electronic device according to an embodiment.

Referring to FIG. 1 and FIG. 2, an electronic device 200 may include a first housing 210 (e.g., a first housing structure) including a first side member 213 (e.g., a side bezel) and a second housing 220 (e.g., a second housing structure) including a second side member 223 (e.g., a side bezel), which are foldably coupled to each other through at least one hinge device 240 and 240-1 (e.g., a hinge module or a hinge structure), based on a folding axis F. For example, the first housing 210 and the second housing 220 may be configured as a foldable housing (e.g., a housing structure). For example, the electronic device 200 may include a first display 230 (e.g., a flexible display, a foldable display, or a main display) disposed to be supported by the first housing 210 and the second housing 220. For example, the first housing 210 may include a first surface 211 and a second surface 212 facing away from the first surface 211 (e.g., in the -z axis direction). For example, the second housing 220 may include a third surface 221 and a fourth surface 222 facing away from the third surface 221 (e.g., in the -z axis direction). For example, the first housing 210 may include a first rear cover 214 coupled to the first side member 213. For example, the second housing 220 may include a second rear cover 224 coupled to the second side member 223. For example, the electronic device 200 may operate to cause, in a first state (e.g., an unfolded state or a flat state) fully unfolded, the first surface 211 and the third surface 221 to face in substantially the same direction (e.g., the z-axis direction). For example, the electronic device 200 may operate to cause, in a second state (e.g., a folded state or a folding state) fully folded, the first surface 211 and the third surface 221 to face each other, or to face away from each other. For example, the electronic device 200 may operate to maintain a third state (e.g., an intermediate state) between the first state and the second state.

According to an embodiment, the electronic device 200 may include a first receiver 201 disposed in the first surface 211 of the first housing 210, at least one first sensor module 204 (e.g., a light sensor) and/or at least one first camera module 205 (e.g., an under display camera (UDC)). For example, the electronic device 200 may include at least one key 206 disposed in the first side member 213. For example, the electronic device 200 may include at least one second camera module 208 and/or a flash 209 disposed in the second surface 212 (e.g., the first rear cover 214) of the first housing 210. For example, the electronic device 200 may include a second display 231 disposed in the fourth surface 222 of the second housing 220, at least one third camera module 225 (e.g., a UDC), at least one second sensor module 226 and/or a second receiver 227. For example, the second display 231 may be disposed to be visible from outside through at least a part of the second rear cover 224. For example, the electronic device 200 may include a speaker 202 disposed in the second side member 223, a microphone 203 and/or a connector port 207 disposed in the second side member 213. At least some of the plurality of components mentioned above may be rearranged in the first housing 210 and/or the second housing 220.

According to an embodiment, the first display 230 (e.g., a flexible display) may include a first region 230a (e.g., a first planar portion) corresponding to at least a part of the first surface 211, a second region 230b (e.g., a second planar portion) corresponding to at least a part of the third surface 221, and a third region 230c (e.g., a flexible portion) connecting the first region 230a and the second region 230b and deformed in the second state (e.g., the folded state) and/or the third state of the electronic device 200. For example, the third region 230c may be disposed at a position overlapping at least in part the at least one hinge device 240 and 240-1, when the first display 230 is viewed from above (e.g., in the z-axis direction). For example, in the second state, the first surface 211 and the third surface 221 face each other, and thus the first display 230 may be disposed not to viewed from the outside (e.g., inward-fold type). For example, in the second state, the first surface 211 and the third surface 221 face away from each other, and thus the first display 230 may be disposed to be viewed from the outside (e.g., outward-fold type).

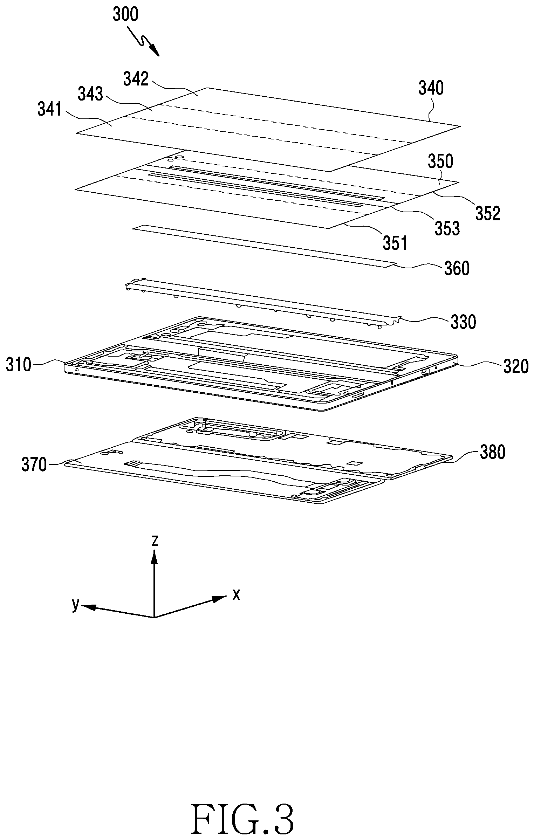

FIG. 3 is an exploded perspective view of a foldable electronic device according to an embodiment.

According to an embodiment of the disclosure, a foldable electronic device 300 may include a first housing 310, a second housing 320, a hinge assembly 330, a flexible display 340, a support plate 350, a cover member 360, a first rear cover 370 and a second rear cover 380. For example, the foldable electronic device 300 may correspond to the electronic device 200 of FIG. 1 and FIG. 2. For example, the first housing 310 may correspond to the first housing 210 of FIG. 1 and FIG. 2, and the second housing 320 may correspond to the second housing 220 of FIG. 1 and FIG. 2. For example, the hinge assembly 330 may correspond to the hinge device 240 of FIG. 1 and FIG. 2. For example, the flexible display 340 may correspond to the first display 230 of FIG. 1 and FIG. 2. For example, the first rear cover 370 and the second rear cover 380 may correspond to the first rear cover 214 and the second rear cover 224 of FIG. 1 and FIG. 2 respectively.

According to an embodiment of the disclosure, the hinge assembly 330 may rotatably connect the first housing 310 and the second housing 320. For example, the first housing 310 may be coupled to one side of the hinge assembly 330, and the second housing 320 may be coupled to the other side of the hinge assembly 330 which is opposite to one side. According to an embodiment, as the first housing 310 and the second housing 320 are rotated by the hinge assembly 330, the foldable electronic device 300 may be folded or unfolded. For example, if the foldable electronic device 300 is unfolded, the first housing 310, the second housing 320 and the hinge assembly 330 may be arranged in parallel. For example, if the foldable electronic device 300 is unfolded, the first housing 310 may be arranged to form substantially 180 degrees with the second housing 320. For example, if the foldable electronic device 300 is folded, the first housing 310 and the second housing 320 may be arranged to be substantially perpendicular to the hinge assembly 330.

According to an embodiment of the disclosure, as the foldable electronic device 300 is switched from the flat state to the folded state, the first housing 310 and the second housing 320 may become close to each other. For example, as the foldable electronic device 300 is switched from the flat state to the folded state, the first housing 310 and the second housing 320 may be arranged to face each other. According to an embodiment, as the foldable electronic device 300 is switched from the folded state to the flat state, the first housing 310 and the second housing 320 may move away from each other.

According to an embodiment of the disclosure, the flexible display 340 may be disposed at least in part within the first housing 310 and the second housing 320. For example, the flexible display 340 may be disposed at least partially in the first housing 310 and the second housing 320 by crossing the hinge assembly 330. According to an embodiment, as the foldable electronic device 300 is folded or unfolded, the flexible display 340 may be folded or unfolded.

According to an embodiment of the disclosure, the flexible display 340 may include a first planar portion 341, a second planar portion 342 and a folding portion 343. For example, the folding portion 343 of the flexible display 340 may be a portion which is folded or unfolded, while the foldable electronic device 300 is folded or unfolded. For example, the first planar portion 341 and the second planar portion 342 of the flexible display 340 may be portions extending from the folding portion 343 and not folded or unfolded while the foldable electronic device 300 is folded or unfolded.

According to an embodiment of the disclosure, for example, the first planar portion 341 of the flexible display 340 may be disposed at least partially in the first housing 310. For example, the second planar portion 342 may be disposed at least partially in the second housing 320. For example, the first planar portion 341 may be a portion extending from one side of the folding portion 343. For example, the second planar portion 342 may be a portion extending from the other side which is opposite to one side of the folding portion 343. For example, the folding portion 343 may be a portion interposed between the first planar portion 341 and the second planar portion 342.

According to an embodiment of the disclosure, the folding portion 343 of the flexible display 340 may be disposed to face the hinge assembly 330. For example, when viewed from a direction (e.g., the -z-axis direction) perpendicular to the flexible display 340, the folding portion 343 of the flexible display 340 may overlap at least in part the hinge assembly 330.

According to an embodiment of the disclosure, as the folding state of the foldable electronic device 300 is changed, a distance between the folding portion 343 of the flexible display 340 and the hinge assembly 330 may change. For example, as the state of the foldable electronic device 300 is changed from the flat state to the folded state, the folding portion 343 of the flexible display 340 may move closer to the hinge assembly 330. For example, as the state of the foldable electronic device 300 is changed from the folded state to the flat state, the folding portion 343 of the flexible display 340 may move away from the hinge assembly 330.

According to an embodiment of the disclosure, the support plate 350 may be disposed between the flexible display 340 and the hinge assembly 330. For example, the support plate 350 may be disposed to correspond to the flexible display 340. According to an embodiment, the support plate 350 may support the flexible display 340. For example, in the flat state of the foldable electronic device 300, the support plate 350 may support the flexible display 340 to block the flexible display 340 from sagging toward the hinge assembly 330. According to an embodiment, while the foldable electronic device 300 is folded, the support plate 350 may be folded together with the flexible display 340. For example, while the foldable electronic device 300 is folded, the support plate 350 may be folded together with the flexible display 340 such that the flexible display 340 is not interfered by the support plate 350.

According to an embodiment of the disclosure, the support plate 350(e.g. support member) may include a first support portion 351, a second support portion 352 and a central support portion 353. For example, the first support portion 351 may be a portion corresponding to the first planar portion 341 of the flexible display 340. For example, the second support portion 352 may be a portion corresponding to the second planar portion 342 of the flexible display 340. For example, the central support portion 353 may be a portion corresponding to the folding portion 343 of the flexible display 340.

For example, the first support portion 351 and the second support portion 352 may be portions which are not bent, while the foldable electronic device 300 is folded or unfolded. For example, the central support portion 353 may be a portion which is bent, while the foldable electronic device 300 is folded or unfolded. According to an embodiment, the first support portion 351 and the second support portion 352 may be portions extended from the central support portion 353. For example, the central support portion 353 may be a portion interposed between the first support portion 351 and the second support portion 352. However, it is not limited thereto, and boundaries or areas of the first support portion 351, the second support portion 352 and the central support portion 353 of the support plate 350 may be changed and set.

According to an embodiment of the disclosure, the first support portion 351 may be a portion for supporting the first planar portion 341 of the flexible display 340. For example, the first support portion 351 may be formed at a position corresponding to the first planar portion 341 of the flexible display 340. According to an embodiment, the second support portion 352 may be a portion for supporting the second planar portion 342 of the flexible display 340. For example, the second support portion 352 may be formed at a position corresponding to the second planar portion 342 of the flexible display 340. According to an embodiment, the central support portion 353 may be a portion for supporting the folding portion 343 of the flexible display 340. For example, the central support portion 353 may be formed at a position corresponding to the folding portion 343 of the flexible display 340.

According to an embodiment of the disclosure, in the flat state of the foldable electronic device 300, the first support portion 351 of the support plate 350 may support the first planar portion 341 of the flexible display 340, the second support portion 352 of the support plate 350 may support the second planar portion 342 of the flexible display 340, and the central support portion 353 of the support plate 350 may support the folding portion 343 of the flexible display 340. According to an embodiment, while the foldable electronic device 300 is folded, the first support portion 351 of the support plate 350 may support the first planar portion 341 of the flexible display 340, the second support portion 352 of the support plate 350 may support the second planar portion 321 of the flexible display 340, and the central support portion 353 of the support plate 350 may be folded together with the folding portion 343 of the flexible display 340.

According to an embodiment of the disclosure, the central support portion 353 may be formed wider than the folding portion 343 of the flexible display 340. However, it is not limited thereto, and the areas of the first support portion 351, the second support portion 352 and the central support portion 353 of the support plate 350 may vary.

According to an embodiment of the disclosure, the cover member 360 may be disposed between the flexible display 340 and the support plate 350. For example, the cover member 360 may be disposed on the central support portion 353 of the support plate 350. For example, the cover member 360 may be disposed at a position corresponding to the central support portion 353 of the support plate 350. For example, the cover member 360 may be formed in a size to cover the central support portion 353. However, it is not limited thereto, and the area of the central support portion 353 of the support plate 350, and the area of the cover member 360 may be changed.

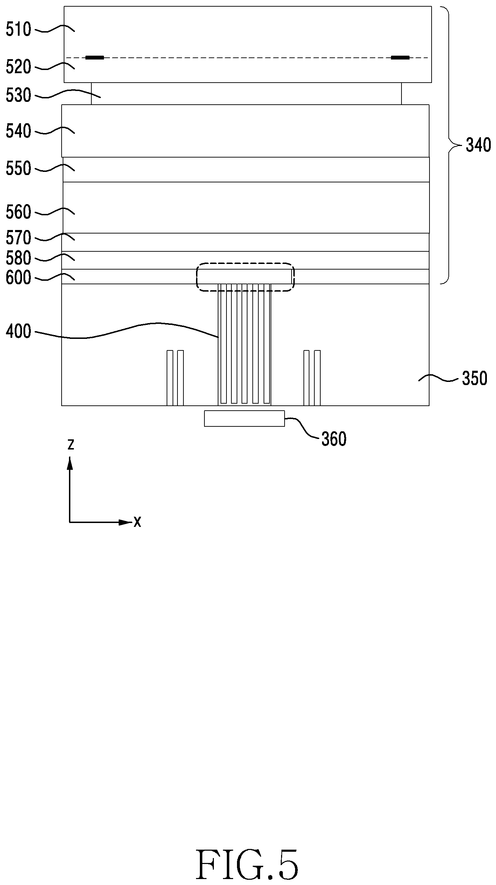

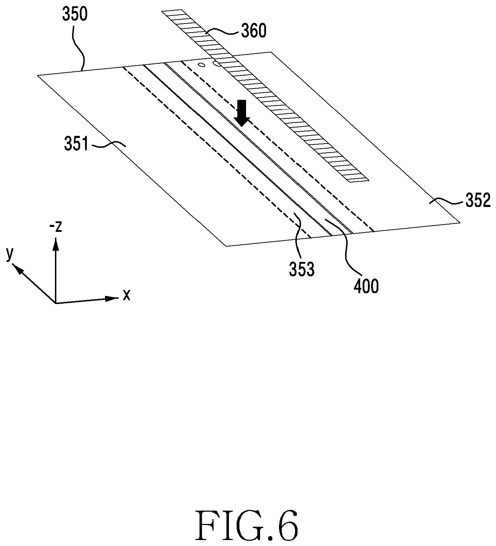

According to an embodiment of the disclosure, while the foldable electronic device 300 is folded, the cover member 360 may protect the folding portion 342 such that the central support portion 353 of the support plate 350 is not interfered by the hinge assembly 330. According to an embodiment, the cover member 360 may be disposed to cover at least a part of the support plate 350 to block or reduce foreign substances from entering the support plate 350. According to an embodiment, the arrangement and the coupling of the cover member 360 and the support plate 350 shall be described in FIG. 5 and FIG. 6.

According to an embodiment of the disclosure, the first rear cover 370 may protect exterior of the first housing 310. For example, the first rear cover 370 may be disposed on a surface facing away from the flexible display 340 of the first housing 310. According to an embodiment, the second rear cover 380 may protect exterior of the second housing 320. For example, the second rear cover 380 may be disposed on a surface facing away from the flexible display 340 of the second housing 320.

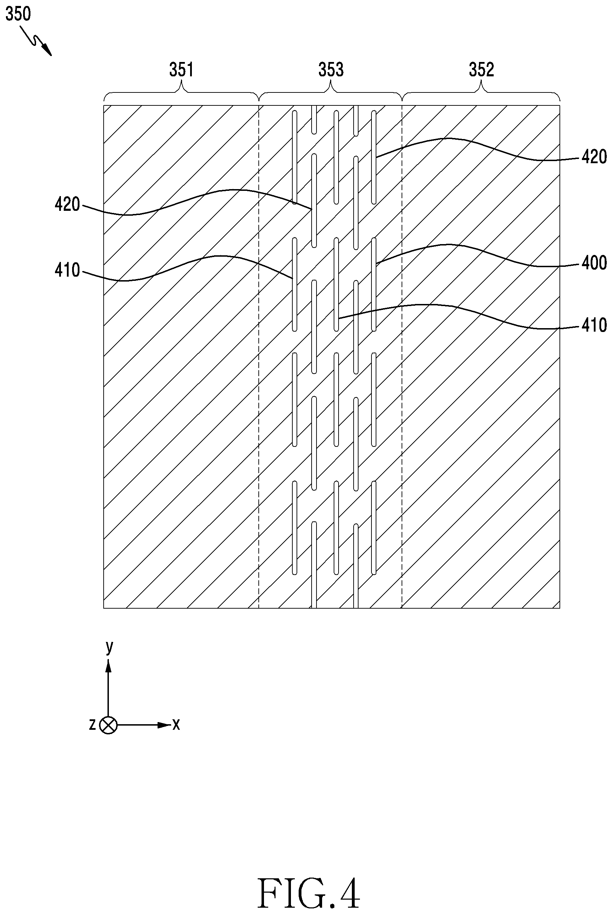

FIG. 4 is a front view of a support plate including a plurality of openings according to an embodiment.

According to an embodiment of the disclosure, the support plate 350 may include a plurality of openings 400. For example, the plurality of openings 400 of the support plate 350 may alleviate or distribute stress applied to the folding portion 343 of the flexible display 340 by the central support portion 353 of the support plate 350, while the foldable electronic device 300 is folded. For example, the plurality of openings 400 of the support plate 350 may allow the central support portion 353 of the support plate 350 to easily bend. For example, the plurality of openings 400 of the support plate 350 may improve durability of the support plate 350 by preventing the support plate 350 from cracking even with repeated folding.

According to an embodiment of the disclosure, the plurality of openings 400 may be formed in the central support portion 353 of the support plate 350. For example, the plurality of openings 400 may be formed to penetrate the central support portion 353. For example, the plurality of openings 400 may be formed in a portion corresponding to the folding portion 343 of the flexible display 340 in the central support portion 353. According to an embodiment, the plurality of openings 400 may be formed in a lattice form. For example, the plurality of openings 400 may be arranged in rows and columns. For example, the plurality of openings 400 may be disposed apart from each other.

According to an embodiment of the disclosure, the plurality of openings 400 may be formed to have a specific length. For example, the plurality of openings 400 may be formed to have the length in a direction (e.g., the y-axis direction) parallel to a rotational axis of the hinge assembly 330. According to an embodiment, the plurality of openings 400 may be arranged to overlap at least in part, when viewed from a direction perpendicular to the side surface of the support plate 350. For example, the plurality of openings 400 may be regularly arranged to overlap at least in part, when viewed from a direction perpendicular to the longitudinal direction of the plurality of openings 400.

Referring to FIG. 4, for example, first openings 410 and second openings 420 of the plurality of openings 400 may be arranged in an alternating manner. For example, the second openings 420 may be arranged between the first openings 410. For example, the first openings 410 may be arranged between the second openings 420. For example, the first openings 410 and the second openings 420 may be arranged to overlap at least in part, when viewed form the side of the support plate 350. However, the length, the spacing and/or the arrangement order of the plurality of openings 400 may not be limited thereto.

FIG. 5 is a cross-sectional view of a flexible display, a support plate and a cover member according to an embodiment.

According to an embodiment of the disclosure, the flexible display 340 may be disposed on the support plate 350. For example, the flexible display 340 may be formed by stacking a plurality of configurations. However, it is not limited to the configurations shown in FIG. 5, and the flexible display 340 may be formed by omitting some configurations or adding other configurations.

According to an embodiment of the disclosure, the flexible display 340 may include a first protective layer 510, a first adhesive layer 520, a glass 530, a second adhesive layer 540, a panel 550, a film 560, a third adhesive layer 570 and a second protective layer 580. For example, the first protective layer 510 may construct a top surface facing in the +z-axis direction of the flexible display 340. For example, the second protective layer 580 may construct a bottom surface facing in the -z-axis direction of the flexible display 340.

According to an embodiment of the disclosure, the first protective layer 510 and the second protective layer 580 may protect the flexible display 340 from external shock. For example, the first protective layer 510 and the second protective layer 580 may prevent a scratch from the flexible display 340 or prevent foreign substances from entering the flexible display 340 from outside.

According to an embodiment of the disclosure, the glass 530 may be disposed on a bottom surface of the first protective layer 510. For example, the glass 530 may be attached by the first adhesive layer 520 to the bottom surface of the first protective layer 510. According to an embodiment, the glass 530 may allow the flexible display 340 to easily receive a user's touch input, and improve quality of the flexible display 340. According to an embodiment, the glass 530 may be formed with a thin and flexible material to fold and unfold the flexible display 340.

According to an embodiment of the disclosure, the panel 550 may be attached by the second adhesive layer 540 to a bottom surface of the glass 530. According to an embodiment, the panel 550 may receive a user's touch input, or display a screen to the user. For example, the panel 550 may be formed with a solid material for the sake of the durability of the flexible display 340.

According to an embodiment of the disclosure, the film 560 may be disposed on a bottom surface of the panel 550, to maintain structural stability of the panel 550, or to protect the panel 550 from the outside. According to an embodiment, the third adhesive layer 570 may attach the second protective layer 580 to the bottom surface of the film 560.

According to an embodiment of the disclosure, the flexible display 340 may be attached onto the support plate 350. For example, the flexible display 340 may be attached onto the support plate 350 using the first adhesive member 600. For example, one surface facing in the +z-axis direction of the first adhesive layer 600 may be attached to the flexible display, and the other surface facing in the -z-axis direction may be attached to the support plate 350. For example, one surface of the first adhesive member 600 may be attached to cover the first planar portion 341, the second planar portion 342 and the folding portion 343 of the flexible display 340. For example, the other surface of the first adhesive member 600 may be attached to cover the first support portion 351, the second support portion 352 and the central support portion 353 of the support plate 350.

According to various embodiments of the disclosure, since the first adhesive member 600 is attached to the support plate 350 to cover the plurality of openings 400 formed in the central support portion 353, the folding portion 343 of the flexible display 340 may not be interfered by the plurality of openings 400 of the support plate 350, while the foldable electronic device 300 is folded or unfolded. For example, since the first adhesive member 600 is attached to the support plate 350 to cover the plurality of openings 400 formed in the central support portion 353, the folding portion 343 of the flexible display 340 may not contact edges of the plurality of openings 400, while the foldable electronic device 300 is folded or unfolded. For example, the first adhesive member 600 may be used as a cushioning member between the folding portion 343 of the flexible display 340 and the support plate 350, to thus improve the durability of the flexible display 340.

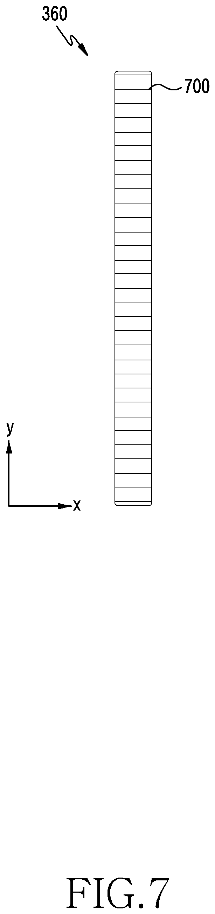

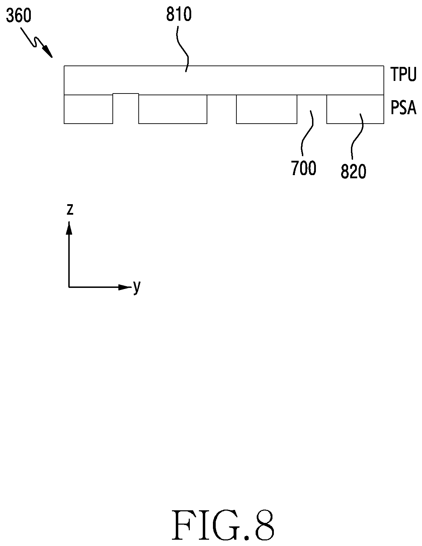

According to an embodiment of the disclosure, the cover member 350 may be disposed to cover at least in part the support plate 350 to prevent or reduce foreign substances from entering the support plate 350. For example, to prevent or reduce foreign substances from entering the plurality of openings 400 of the support plate 350 attached with the first adhesive member 600, the cover member 350 may be disposed to cover at least in part the opposite surface (e.g., a surface facing in the -z-axis direction) of the surface facing the flexible display 340 in the support plate 350. According to an embodiment, the cover member 360 may alleviate external shock applied to the support plate 350. According to an embodiment, since the first adhesive member 600 and the cover member 360 are disposed to cover the plurality of openings 400, air may be trapped in the plurality of openings 400. Hence, a structure for discharging the trapped air inside the plurality of openings 400 may be formed in the cover member 360, which shall be described in FIG. 7 and FIG. 8.

FIG. 6 is an exploded perspective view of a support plate and a cover member according to an embodiment.

According to an embodiment of the disclosure, the cover member 360 may be disposed to cover at least in part the bottom surface facing in the -z-axis direction of the support plate 360. For example, the cover member 360 may be disposed to cover at least in part the central support portion 353 of the support plate 360. For example, the cover member 360 may be disposed to cover at least in part the plurality of openings 400 formed in the central support portion 353 of the support plate 360. For example, the first adhesive member 600 may be disposed to cover an outer circumferential surface of the plurality of openings 400 formed in one surface facing in the +z-axis of the support plate 360, and the cover member 360 may be disposed to cover an outer circumferential surface of the plurality of openings 400 formed in the other surface facing in the -z-axis of the support plate 360.

FIG. 7 is a view illustrating a cover member including a plurality of recesses according to an embodiment.

According to an embodiment of the disclosure, the cover member 360 may include a plurality of recesses 700. For example, the plurality of recesses 700 may be formed on one surface of the cover member 360. For example, the plurality of recesses 700 may be formed on a surface contacting the support plate 350 in the cover member 360. For example, the plurality of recesses 700 may be formed on a surface of the cover member 360, facing the plurality of openings 400 of the support plate 350.

According to an embodiment of the disclosure, the plurality of recesses 700 may be formed apart on one surface of the cover member 360. For example, the plurality of recesses 700 may be arranged at specific intervals. For example, the plurality of recesses 700 may be arranged along a direction (e.g., the y-axis direction) parallel to the rotational axis of the hinge assembly 300. According to an embodiment, the plurality of recesses 700 may be formed to extend between at least two side surfaces of side surfaces of the cover member 360. For example, the plurality of recesses 700 may be formed to extend from a first side surface facing in the -x-axis direction of the cover member 360 to a second side surface facing in the +x-axis direction. According to an embodiment, the plurality of recesses 700 may be formed to be opened through at least two side surfaces of the side surfaces of the cover member 360. For example, the plurality of recesses 700 may be formed to be opened from the first side surface to the second side surface of the cover member 360. According to an embodiment, the air inside the plurality of openings 400 may be discharged to the outside of the foldable electronic device 300 through the plurality of recesses 700 of the cover member 360.

According to an embodiment of the disclosure, the plurality of recesses 700 may also be referred to as a plurality of segmented portions.

FIG. 8 is a view illustrating a cushioning member and a second adhesive member of a cover member according to an embodiment.

According to an embodiment of the disclosure, the cover member 360 may include a cushioning member 810 and a second adhesive member 820. For example, the cushioning member 810 of the cover member 360 may protect the support plate 350 from external shock. For example, the second adhesive member 820 may attach the cover member 360 and the support plate 360.

According to an embodiment of the disclosure, the cushioning member 810 may construct one surface of the cover member 360, and the second adhesive member 820 may construct at least a part of the other surface opposite to one surface of the cover member 360. For example, the cushioning member 810 may absorb impact on the hinge assembly 330, with the cover member 360 attached to the support plate 350. For example, the second adhesive member 820 may overlap at least in part the plurality of openings 400, to allow the cover member 360 to cover the plurality of openings 400 of the support plate 350.

According to an embodiment of the disclosure, the second adhesive member 820 may include the plurality of recesses 700(e.g. a plurality of segmented portions). For example, the plurality of recesses 700 may be formed by the second adhesive member 820. According to an embodiment, since the second adhesive member 820 including the plurality of recesses 700 attaches the cover member 360 to the support plate 350, spaces may be formed between the cushioning member 810 and the plurality of openings 400. For example, the air inside the plurality of openings 400 may be discharged to the outside of the foldable electronic device 300 through the plurality of recesses 700 between the cushioning member 810 and the plurality of openings 400. For example, the plurality of openings 400 and the plurality of recesses 700 may form a ventilation path for moving the air.

According to an embodiment of the present disclosure, the cover member (360) may include a plurality of segmented portions. For example, the plurality of segmented portions may be formed by a second adhesive member (820). For example, the plurality of segmented portions may be portions segmented by the second adhesive member (820) adhered to one surface of the buffer member (810) facing the support plate (350). For example, the plurality of segmented portions may be portions of the one surface of the buffer member (810) facing the support plate (350) to which the second adhesive member (820) is not adhered. For example, the plurality of segmented portions may be portions of the one surface of the buffer member (810) facing the support plate (350) on which the second adhesive member (820) is not formed.

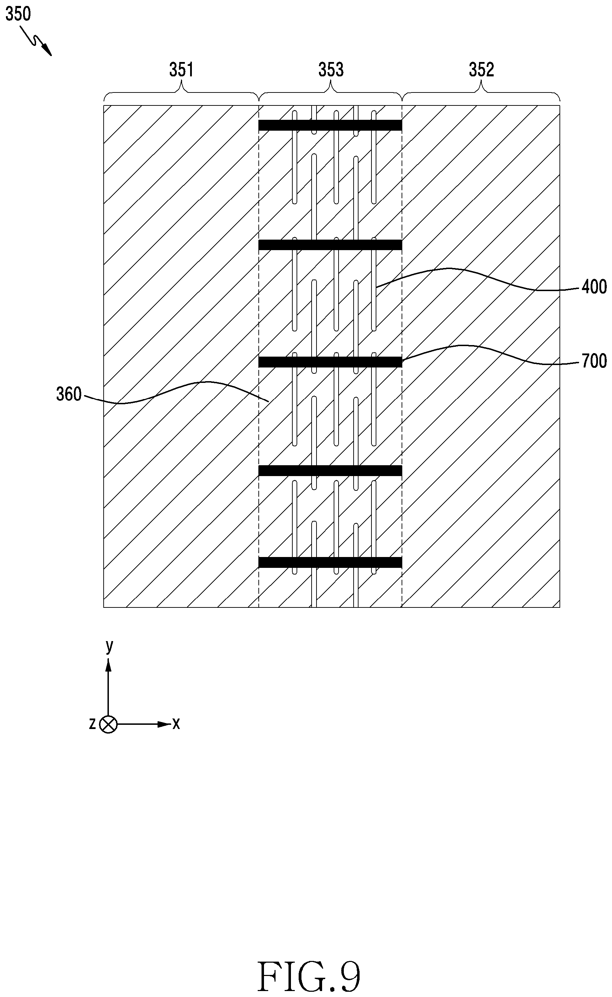

FIG. 9 is a view illustrating a cover member disposed on a support plate according to an embodiment.

According to an embodiment of the disclosure, the cover member 360 may be attached onto the support plate 350 such that the plurality of recesses 700 overlaps at least in part the plurality of openings 400. According to an embodiment, the cover member 360 may be attached onto the support plate 350 such that the plurality of openings 700 each overlaps at least one of the plurality of recesses 700. For example, the cover member 360 may be attached onto the support plate 350 such that the plurality of openings 400 each overlaps at least one of the plurality of recesses 700, when viewed from the direction (e.g., the z-axis direction) perpendicular to one surface of the support plate 350. For example, the cover member 360 may be attached onto the support plate 350 such that the plurality of recesses 700 each crosses at least one the plurality of openings 400.

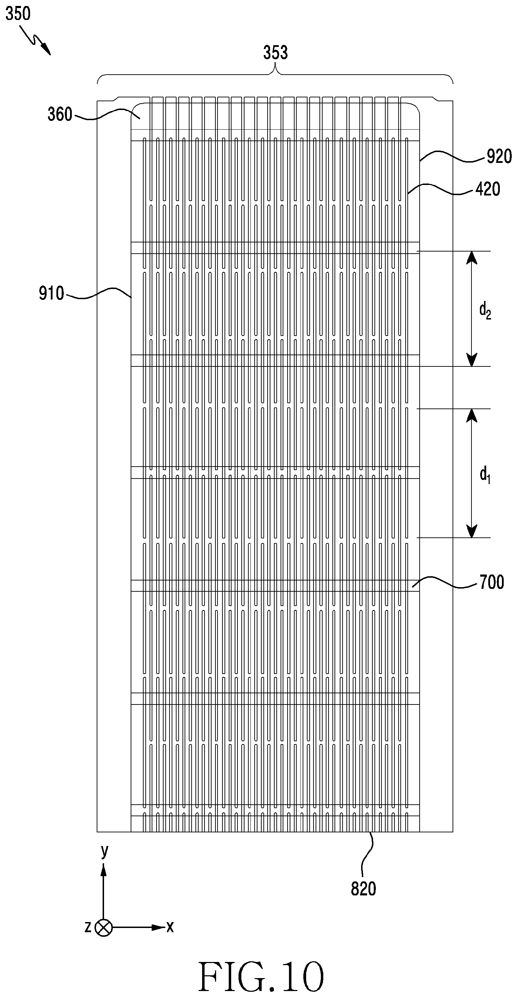

FIG. 10 is a view illustrating coupling of a support plate and a cover member according to an embodiment.

According to an embodiment of the disclosure, the plurality of recesses 700 may be formed to pass through side surfaces of the cover member 360. For example, the plurality of recesses 700 may be formed to pass through a first side surface 910 and a second side surface 920 of the cover member 360. For example, the plurality of recesses 700 may extend to be opened from the first side surface 910 to the second side surface 920 of the cover member 360. For example, the first side surface 910 may be a side surface formed in parallel to the rotational axis of the hinge assembly 330 among the side surfaces of the cover member 360. For example, the second side surface 820 may be a side surface opposite to the first side surface 910.

According to an embodiment of the disclosure, the air inside the plurality of openings 400 may be discharged through the first side surface 910 and/or the second side surface 920 of the cover member 360, along the plurality of recesses 700 of the cover member 360. For example, as the air inside the plurality of openings 400 is discharged through the first side surface 910 and/or the second side surface 920, no air bubbles may be generated in the first adhesive member 600.

According to an embodiment of the disclosure, the plurality of openings 400 may be formed to have a specific length d₁. For example, the plurality of openings 400 may be formed to have the specific length d₁ in a direction parallel to the first side surface 910 and the second side surface 920 of the cover member 360. For example, the plurality of openings 400 may be formed apart. For example, the spacing between the plurality of openings 400 may be smaller than the specific length d₁.

According to an embodiment of the disclosure, the plurality of openings 400 each may be disposed to overlap at least one of the plurality of recesses 700. For example, an interval d₂ between the plurality of recesses 700 may be smaller than the specific length d₁ of the plurality of openings 400. For example, since the interval d₂ between the plurality of recesses 700 is formed smaller than the specific length d1 of the plurality of openings 400, there may be no opening arranged without connection to the plurality of recesses 700. However, it is not limited thereto, the specific length d1 of the plurality of openings 400 and the interval d2 between the plurality of recesses 700 may be changed in a range that the plurality of openings 400 each overlaps at least one of the plurality of recesses 700.

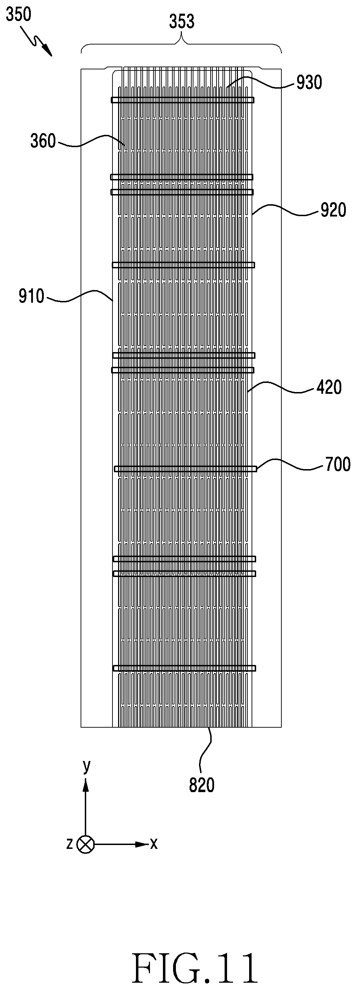

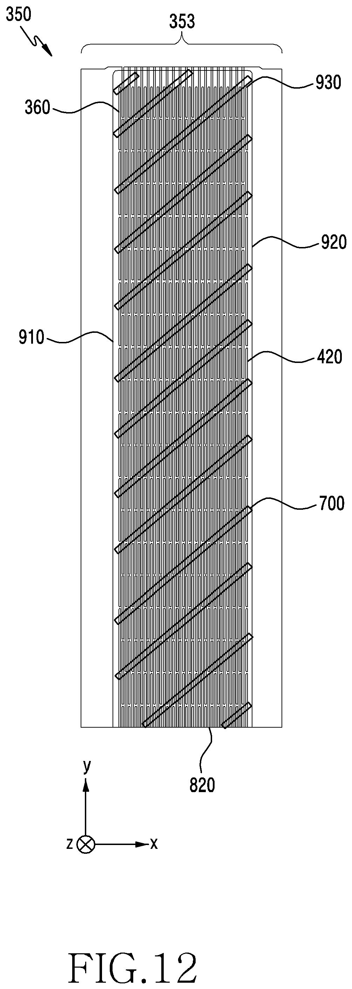

FIG. 11 and FIG. 12 are views illustrating an example of a plurality of recesses formed in a cover member according to an embodiment.

Referring to FIG. 11, according to an embodiment, some of the plurality of recesses 700 may be arranged adjacent to each other, and some other of the plurality of recesses 700 may be arranged relatively away. For example, if an opening not overlapping with any one of the plurality of recesses 700 is formed between two recesses of the plurality of recesses 700, a recess may be formed to cover the opening. For example, the pattern of forming the plurality of recesses 700 is not limited to FIG. 11, more recesses than the recesses shown in FIG. 11 may be formed between two recesses, and the spacing between the plurality of recesses 700 may be formed differently.

Referring to FIG. 12, the plurality of recesses 700 may be formed to extend from the first side surface 910 of the cover member 360 to a third side surface 930 formed perpendicular to the first side surface 910. For example, the plurality of recesses 700 may be extended to open from the first side surface 910 to the third side surface 930 of the cover member. However, it is not limited thereto, and the plurality of recesses 700 may be extended to open from the first side surface 910 to a fourth side surface, and to open from the second side surface 920 to the third side surface 930 or the fourth side surface. For example, as the plurality of recesses 700 is extended to open from the first side surface 710 to the third side surface 930, the air discharge path may be formed shorter to discharge the air fast.

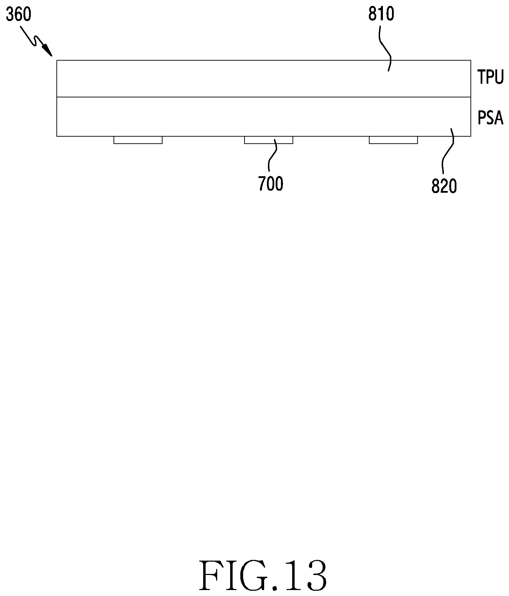

FIG. 13 is a view illustrating a cover member including a third adhesive member according to an embodiment.

According to an embodiment of the disclosure, the cover member 360 may include a third adhesive member 1000. For example, the third adhesive member 1000 may be attached on the second adhesive member 820. For example, a plurality of third adhesive members 1000 may be attached on the second adhesive member 820 at specific intervals. According to an embodiment, one surface of the third adhesive member 1000 may be attached on the second adhesive member 820, and the other surface opposite to one surface of the third adhesive member 1000 may not be attached in the central support portion 353 of the support plate 350. For example, the other surface of the third adhesive member 1000 may not include an adhesive material.

According to an embodiment of the disclosure, with the cover member 360 attached to the support plate 350, a space may be formed between the second adhesive member 820 and the support plate 350 by the third adhesive member 1000. For example, a region having the third adhesive member 1000 in the second adhesive member 820 may not be attached to the support plate 350, to thus form the specific space. According to an embodiment, the air inside the plurality of openings 400 of the support plate 350 may be discharged through the space provided with the third adhesive member 1000 between the second adhesive member 820 and the support plate 350.

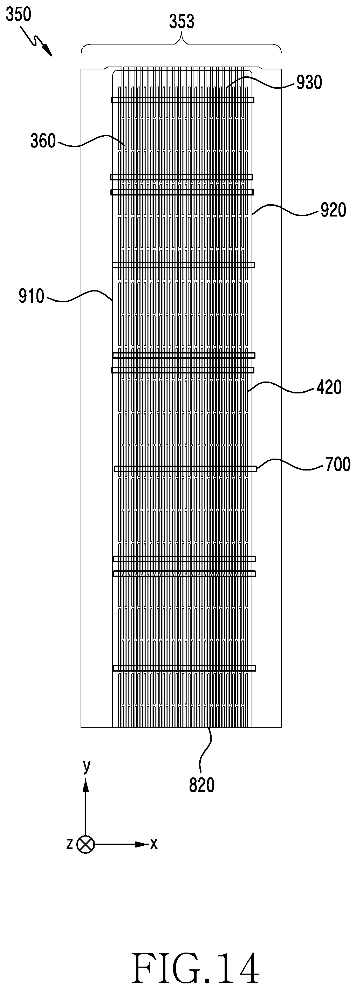

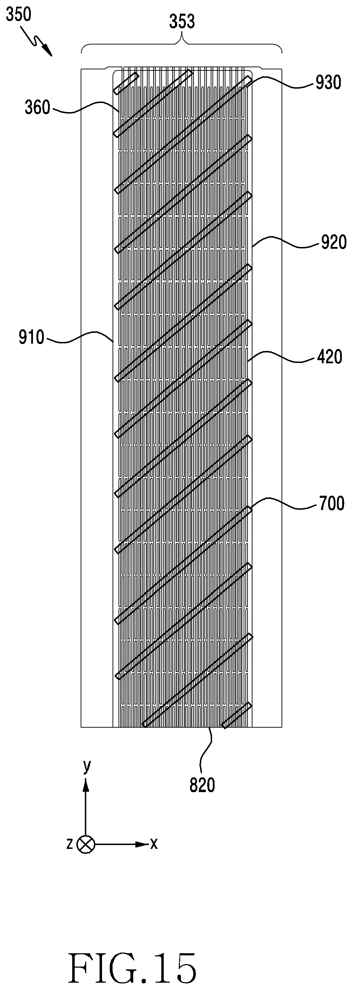

FIG. 14 and FIG. 15 are views illustrating an example of a plurality of recesses formed by a third adhesive member and a support plate according to an embodiment.

According to an embodiment of the disclosure, the plurality of openings 400 each may overlap at least one of the plurality of third adhesive members 1000. For example, with the cover member 360 attached to the central support portion 353 of the support plate 350, the plurality of openings 400 each may overlap at least one of the plurality of third adhesive members 1000, when viewed in a direction perpendicular to the support plate 350, for example by viewing the support plate 350 from a vertical direction when the support plate 350 is laid out horizontally.

According to an embodiment of the disclosure, referring to FIG. 14 and FIG. 15, the plurality of recesses 700 may be formed by the third adhesive members 1000. Referring to FIG. 14, according to an embodiment, some of the plurality of recesses 700 may be arranged adjacently, and some other of the plurality of recesses 700 may be arranged relatively far apart. For example, if an opening not overlapping any one of the plurality of recesses 700 is formed between two recesses of the plurality of recesses 700, a recess may be formed to cover the opening. For example, the pattern of forming the plurality of recesses 700 is not limited to FIG. 14, more recesses than the recesses shown in FIG. 14 may be formed between two recesses, and the interval between the plurality of recesses 700 may differ.

Referring to FIG. 15, the plurality of recesses 700 may be formed to extend from the first side surface 910 of the cover member 360 to the third side surface 930, and the plurality of recesses 700 may be formed perpendicular to the first side surface 910. For example, the plurality of recesses 700 may be extended to open from the first side surface 910 of the cover remember 360 to the third side surface 930. However, it is not limited thereto, and the plurality of recesses 700 may be extended to open from the first side surface 910 to the fourth side surface 940, and may be extended to open from the second side surface 920 to the third side surface 930 or the fourth side surface 940. For example, as the plurality of recesses 700 is extended to open from the first side surface 910 to the third side surface 930, the air discharge path may be formed shorter, to discharge the air faster.

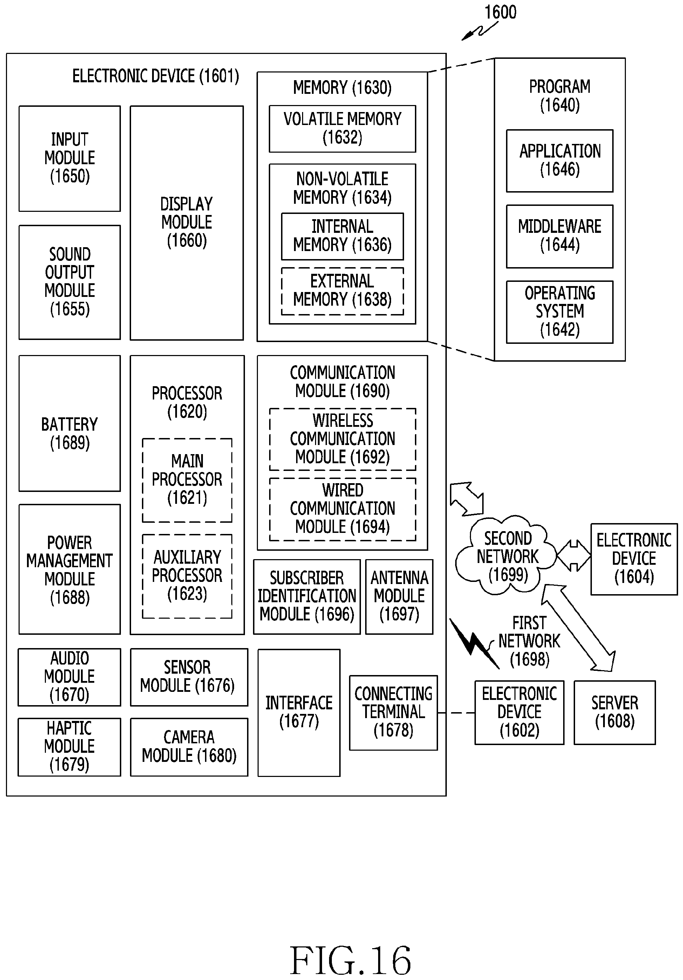

Fig. 16 is a block diagram illustrating an electronic device 1601 in a network environment 1600 according to various embodiments.

Referring to Fig. 16, the electronic device 1601 in the network environment 1600 may communicate with an electronic device 1602 via a first network 1698 (e.g., a short-range wireless communication network), or at least one of an electronic device 1604 or a server 1608 via a second network 1699 (e.g., a long-range wireless communication network). According to an embodiment, the electronic device 1601 may communicate with the electronic device 1604 via the server 1608. According to an embodiment, the electronic device 1601 may include a processor 1620, memory 1630, an input module 1650, a sound output module 1655, a display module 1660, an audio module 1670, a sensor module 1676, an interface 1677, a connecting terminal 1678, a haptic module 1679, a camera module 1680, a power management module 1688, a battery 1689, a communication module 1690, a subscriber identification module(SIM) 1696, or an antenna module 1697. In some embodiments, at least one of the components (e.g., the connecting terminal 1678) may be omitted from the electronic device 1601, or one or more other components may be added in the electronic device 1601. In some embodiments, some of the components (e.g., the sensor module 1676, the camera module 1680, or the antenna module 1697) may be implemented as a single component (e.g., the display module 1660).

The processor 1620 may execute, for example, software (e.g., a program 1640) to control at least one other component (e.g., a hardware or software component) of the electronic device 1601 coupled with the processor 1620, and may perform various data processing or computation. According to one embodiment, as at least part of the data processing or computation, the processor 1620 may store a command or data received from another component (e.g., the sensor module 1676 or the communication module 1690) in volatile memory 1632, process the command or the data stored in the volatile memory 1632, and store resulting data in non-volatile memory 1634. According to an embodiment, the processor 1620 may include a main processor 1621 (e.g., a central processing unit (CPU) or an application processor (AP)), or an auxiliary processor 1623 (e.g., a graphics processing unit (GPU), a neural processing unit (NPU), an image signal processor (ISP), a sensor hub processor, or a communication processor (CP)) that is operable independently from, or in conjunction with, the main processor 1621. For example, when the electronic device 1601 includes the main processor 1621 and the auxiliary processor 1623, the auxiliary processor 1623 may be adapted to consume less power than the main processor 1621, or to be specific to a specified function. The auxiliary processor 1623 may be implemented as separate from, or as part of the main processor 1621.

The auxiliary processor 1623 may control at least some of functions or states related to at least one component (e.g., the display module 1660, the sensor module 1676, or the communication module 1690) among the components of the electronic device 1601, instead of the main processor 1621 while the main processor 1621 is in an inactive (e.g., sleep) state, or together with the main processor 1621 while the main processor 1621 is in an active state (e.g., executing an application). According to an embodiment, the auxiliary processor 1623 (e.g., an image signal processor or a communication processor) may be implemented as part of another component (e.g., the camera module 1680 or the communication module 1690) functionally related to the auxiliary processor 1623. According to an embodiment, the auxiliary processor 1623 (e.g., the neural processing unit) may include a hardware structure specified for artificial intelligence model processing. An artificial intelligence model may be generated by machine learning. Such learning may be performed, e.g., by the electronic device 1601 where the artificial intelligence is performed or via a separate server (e.g., the server 1608). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1630 may store various data used by at least one component (e.g., the processor 1620 or the sensor module 1676) of the electronic device 1601. The various data may include, for example, software (e.g., the program 1640) and input data or output data for a command related thererto. The memory 1630 may include the volatile memory 1632 or the non-volatile memory 1634.

The program 1640 may be stored in the memory 1630 as software, and may include, for example, an operating system (OS) 1642, middleware 1644, or an application 1646.

The input module 1650 may receive a command or data to be used by another component (e.g., the processor 1620) of the electronic device 1601, from the outside (e.g., a user) of the electronic device 1601. The input module 1650 may include, for example, a microphone, a mouse, a keyboard, a key (e.g., a button), or a digital pen (e.g., a stylus pen).

The sound output module 1655 may output sound signals to the outside of the electronic device 1601. The sound output module 1655 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1660 may visually provide information to the outside (e.g., a user) of the electronic device 1601. The display module 1660 may include, for example, a display, a hologram device, or a projector and control circuitry to control a corresponding one of the display, hologram device, and projector. According to an embodiment, the display module 1660 may include a touch sensor adapted to detect a touch, or a pressure sensor adapted to measure the intensity of force incurred by the touch.

The audio module 1670 may convert a sound into an electrical signal and vice versa. According to an embodiment, the audio module 1670 may obtain the sound via the input module 1650, or output the sound via the sound output module 1655 or a headphone of an external electronic device (e.g., an electronic device 1602) directly (e.g., wiredly) or wirelessly coupled with the electronic device 1601.

The sensor module 1676 may detect an operational state (e.g., power or temperature) of the electronic device 1601 or an environmental state (e.g., a state of a user) external to the electronic device 1601, and then generate an electrical signal or data value corresponding to the detected state. According to an embodiment, the sensor module 1676 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1677 may support one or more specified protocols to be used for the electronic device 1601 to be coupled with the external electronic device (e.g., the electronic device 1602) directly (e.g., wiredly) or wirelessly. According to an embodiment, the interface 1677 may include, for example, a high definition multimedia interface (HDMI), a universal serial bus (USB) interface, a secure digital (SD) card interface, or an audio interface.

A connecting terminal 1678 may include a connector via which the electronic device 1601 may be physically connected with the external electronic device (e.g., the electronic device 1602). According to an embodiment, the connecting terminal 1678 may include, for example, an HDMI connector, a USB connector, an SD card connector, or an audio connector (e.g., a headphone connector).

The haptic module 1679 may convert an electrical signal into a mechanical stimulus (e.g., a vibration or a movement) or electrical stimulus which may be recognized by a user via his tactile sensation or kinesthetic sensation. According to an embodiment, the haptic module 1679 may include, for example, a motor, a piezoelectric element, or an electric stimulator.

The camera module 1680 may capture a still image or moving images. According to an embodiment, the camera module 1680 may include one or more lenses, image sensors, image signal processors, or flashes.

The power management module 1688 may manage power supplied to the electronic device 1601. According to one embodiment, the power management module 1688 may be implemented as at least part of, for example, a power management integrated circuit (PMIC).

The battery 1689 may supply power to at least one component of the electronic device 1601. According to an embodiment, the battery 1689 may include, for example, a primary cell which is not rechargeable, a secondary cell which is rechargeable, or a fuel cell.

The communication module 1690 may support establishing a direct (e.g., wired) communication channel or a wireless communication channel between the electronic device 1601 and the external electronic device (e.g., the electronic device 1602, the electronic device 1604, or the server 1608) and performing communication via the established communication channel. The communication module 1690 may include one or more communication processors that are operable independently from the processor 1620 (e.g., the application processor (AP)) and supports a direct (e.g., wired) communication or a wireless communication. According to an embodiment, the communication module 1690 may include a wireless communication module 1692 (e.g., a cellular communication module, a short-range wireless communication module, or a global navigation satellite system (GNSS) communication module) or a wired communication module 1694 (e.g., a local area network (LAN) communication module or a power line communication (PLC) module). A corresponding one of these communication modules may communicate with the external electronic device via the first network 1698 (e.g., a short-range communication network, such as BluetoothTM, wireless-fidelity (Wi-Fi) direct, or infrared data association (IrDA)) or the second network 1699 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1692 may identify and authenticate the electronic device 1601 in a communication network, such as the first network 1698 or the second network 1699, using subscriber information (e.g., international mobile subscriber identity (IMSI)) stored in the subscriber identification module 1696.

The wireless communication module 1692 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1692 may support a high-frequency band (e.g., the mmWave band) to achieve, e.g., a high data transmission rate. The wireless communication module 1692 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1692 may support various requirements specified in the electronic device 1601, an external electronic device (e.g., the electronic device 1604), or a network system (e.g., the second network 1699). According to an embodiment, the wireless communication module 1692 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1697 may transmit or receive a signal or power to or from the outside (e.g., the external electronic device) of the electronic device 1601. According to an embodiment, the antenna module 1697 may include an antenna including a radiating element composed of a conductive material or a conductive pattern formed in or on a substrate (e.g., a printed circuit board (PCB)). According to an embodiment, the antenna module 1697 may include a plurality of antennas (e.g., array antennas). In such a case, at least one antenna appropriate for a communication scheme used in the communication network, such as the first network 1698 or the second network 1699, may be selected, for example, by the communication module 1690 (e.g., the wireless communication module 1692) from the plurality of antennas. The signal or the power may then be transmitted or received between the communication module 1690 and the external electronic device via the selected at least one antenna. According to an embodiment, another component (e.g., a radio frequency integrated circuit (RFIC)) other than the radiating element may be additionally formed as part of the antenna module 1697.

According to various embodiments, the antenna module 1697 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1601 and the external electronic device 1604 via the server 1608 coupled with the second network 1699. Each of the electronic devices 1602 or 1604 may be a device of a same type as, or a different type, from the electronic device 1601. According to an embodiment, all or some of operations to be executed at the electronic device 1601 may be executed at one or more of the external electronic devices 1602, 1604, or 1608. For example, if the electronic device 1601 should perform a function or a service automatically, or in response to a request from a user or another device, the electronic device 1601, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1601. The electronic device 1601 may provide the outcome, with or without further processing of the outcome, as at least part of a reply to the request. To that end, a cloud computing, distributed computing, mobile edge computing (MEC), or client-server computing technology may be used, for example. The electronic device 1601 may provide ultra low-latency services using, e.g., distributed computing or mobile edge computing. In another embodiment, the external electronic device 1604 may include an internet-of-things (IoT) device. The server 1608 may be an intelligent server using machine learning and/or a neural network. According to an embodiment, the external electronic device 1604 or the server 1608 may be included in the second network 1699. The electronic device 1601 may be applied to intelligent services (e.g., smart home, smart city, smart car, or healthcare) based on 5G communication technology or IoT-related technology.

Problems to be solved according to an embodiment of the disclosure may be as follows.

According to an embodiment of the disclosure, a foldable electronic device including an adhesive member disposed between a flexible display and a support plate may be provided.

According to an embodiment of the disclosure, a foldable electronic device including a cover member disposed to cover a plurality of openings of a support plate may be provided.

According to an embodiment of the disclosure, a foldable electronic device including a cover member disposed to cover a plurality of openings of a support plate, and including a plurality of recesses may be provided.

According to an embodiment of the disclosure, a foldable electronic device comprises: a first housing; a second housing; a hinge assembly for rotatably connecting the first housing and the second housing; a support plate disposed to cross the hinge assembly, the support plate comprising a plurality of openings formed to pass through the support plate; a flexible display supported by the support plate; and a cover member disposed between the hinge assembly and the support plate. The cover member comprises a plurality of recesses formed to extend from a first surface of the cover member to a second surface.

The plurality of openings may each be disposed to overlap at least one of the plurality of recesses, when viewed from a direction perpendicular to the support plate.

The plurality of openings may each be disposed to contact at least one of the plurality of recesses.

The plurality of openings may each be disposed to cooperate with at least one of the plurality of recesses to create at least one passageway from the support plate to the cover member.

The plurality of openings may each be disposed to allow air to flow from each of the plurality of openings to at least one of the plurality of recesses.

The plurality of openings may be formed in a region of the support plate adjacent to the hinge assembly. The plurality of openings may be formed in a central support portion of the support plate, the central support portion lying between the first housing and the second housing.

The first surface may be a first side surface of the cover member. The second surface may be a second side surface of the cover member.

The second surface may be opposite to the first surface. Alternatively, the second surface may be another surface of the cover member other than an opposite surface to the first surface. The second surface may be perpendicular to the first surface
According to an embodiment of the disclosure, a foldable electronic device may include a first housing. The foldable electronic device may include a second housing. The foldable electronic device may include a hinge assembly for rotatably connecting the first housing and the second housing. The foldable electronic device may include a support plate disposed to cross the hinge assembly and disposed in the first housing and the second housing. The support plate may include a first support portion, a second support portion and a central support portion interposed between the first support portion and the second support portion. The central support portion may include a plurality of openings formed to pass through the central support portion. The foldable electronic device may include a flexible display supported by the support plate. The foldable electronic device may include a cover member disposed between the hinge assembly and the support plate, and disposed to cover at least in part the central support portion. The cover member may include a plurality of recesses formed to extend from a first side surface of the cover member to a second side surface which is opposite to the first side surface. The plurality of openings each may be disposed to overlap at least one of the plurality of recesses, when viewed from a direction perpendicular to the support plate.

The first support portion may be at least partially disposed in the first housing.

The second support portion may be at least partially disposed in the second housing.

The central support portion may be at least partially disposed in the hinge assembly.

The plurality of openings may each be disposed to contact at least one of the plurality of recesses.

The plurality of openings may each be disposed to cooperate with at least one of the plurality of recesses to create at least one passageway from the support plate to the cover member.

The plurality of openings may each be disposed to allow air to flow from each of the plurality of openings to at least one of the plurality of recesses.

According to an embodiment of the disclosure, an inner space in each of the plurality of openings may be connected to at least one of spaces formed by the plurality of recesses.

According to an embodiment of the disclosure, air in the inner space of each of the plurality of openings and air in the spaces formed by the plurality of recesses may be discharged through at least one of the first side surface or the second side surface of the cover member.

According to an embodiment of the disclosure, the foldable electronic device may further include a first adhesive member interposed between the flexible display and the support plate, and disposed to cover the plurality of openings. The cover member may include a cushioning member. The cover member may include a second adhesive member interposed between the cushioning member and the support plate, and disposed to cover the plurality of openings. The plurality of recesses may be formed on the cushioning member by the second adhesive member.

According to an embodiment of the disclosure, the plurality of recesses may be arranged on the cover member to be spaced apart from each other.

According to an embodiment of the disclosure, the first side surface and the second side surface may be parallel to an axial direction of the hinge assembly.

According to an embodiment of the disclosure, the plurality of openings may be formed to have a length extended along the axial direction of the hinge assembly. The plurality of openings may be arranged to overlap in part, when viewed from a direction perpendicular to the first side surface and the second side surface.

According to an embodiment of the disclosure, the plurality of recesses may be formed to open from the first side surface to the second side surface.

According to an embodiment of the disclosure, the cover member may include a third side surface perpendicular to the first side surface and the second side surface. Some of the plurality of recesses may be formed to open from the first side surface to the third side surface.

According to an embodiment of the disclosure, the plurality of recesses may be spaced by a plurality of intervals. The plurality of intervals each may be smaller than the length of the plurality of openings.

According to an embodiment of the disclosure, the plurality of recesses may have a plurality of lengths. The plurality of intervals each may be smaller than the plurality of lengths of the plurality of openings.

According to an embodiment of the disclosure, the plurality of recesses may be arranged in parallel.

According to an embodiment of the disclosure, a foldable electronic device comprises: a first housing; a second housing; a hinge assembly for rotatably connecting the first housing and the second housing; a support plate disposed to cross the hinge assembly, the support plate comprising a plurality of openings formed to pass through the central support portion; a flexible display supported by the support plate; a cushioning member interposed between the hinge assembly and the support plate; and an adhesive member interposed between the cushioning member and the support plate, and disposed to cover the plurality of openings.

A plurality of recesses may be formed on the cushioning member by the adhesive member. A plurality of recesses may be formed between the cushioning member and the adhesive member.

The plurality of openings may each be disposed to overlap at least one of the plurality of recesses, when viewed from a direction perpendicular to the support plate.

The plurality of openings may each be disposed to contact at least one of the plurality of recesses.

The plurality of openings may each be disposed to cooperate with at least one of the plurality of recesses to create at least one passageway from the support plate to the cover member.

The plurality of openings may each be disposed to allow air to flow from each of the plurality of openings to at least one of the plurality of recesses.

According to an embodiment of the disclosure, a foldable electronic device may include a first housing. The foldable electronic device may include a second housing. The foldable electronic device may include a hinge assembly for rotatably connecting the first housing and the second housing. The foldable electronic device may include a support plate disposed to cross the hinge assembly and disposed in the first housing and the second housing. The support plate may include a first support portion, a second support portion and a central support portion interposed between the first support portion and the second support portion. The central support portion may include a plurality of openings formed to pass through the central support portion. The foldable electronic device may include a flexible display supported by the support plate. The foldable electronic device may include a cushioning member interposed between the hinge assembly and the support plate, and disposed to cover at least in part the central support portion. The foldable electronic device may include an adhesive member interposed between the cushioning member and the support plate, and disposed to cover the plurality of openings. The plurality of recesses may be formed on the cushioning member by the adhesive member.

The plurality of openings may each be disposed to overlap at least one of the plurality of recesses, when viewed from a direction perpendicular to the support plate.

The plurality of openings may each be disposed to contact at least one of the plurality of recesses.

The plurality of openings may each be disposed to cooperate with at least one of the plurality of recesses to create at least one passageway from the support plate to the cover member.

The plurality of openings may each be disposed to allow air to flow from each of the plurality of openings to at least one of the plurality of recesses.

According to an embodiment of the disclosure, the cushioning member may include a first side surface parallel to an axial direction of the hinge assembly and a second side surface opposite to the first side surface. The plurality of recesses may be opened from the first side surface to the second side surface.

According to an embodiment of the disclosure, air inside the plurality of openings may be discharged through the plurality of recesses.

According to an embodiment of the disclosure, the foldable electronic device may further include another adhesive member interposed between the flexible display and the support plate, and disposed to cover the plurality of openings.

According to an embodiment of the disclosure, the plurality of openings may be formed to have a length extended along the axial direction of the hinge assembly. The plurality of openings may be arranged to overlap in part, when viewed from a direction perpendicular to the first side surface and the second side surface.

According to an embodiment of the disclosure, the plurality of recesses may be spaced by a plurality of intervals. The plurality of intervals each may be smaller than a length of the plurality of openings.

According to an embodiment of the disclosure, the plurality of recesses may have a plurality of lengths. The plurality of intervals each may be smaller than the plurality of lengths of the plurality of openings.

According to an embodiment of the disclosure, the plurality of recesses may be arranged in parallel.

Effects of the invention according to an embodiment of the disclosure are as follows.

According to an embodiment of the disclosure, durability of a foldable electronic device may be improved, by arranging an adhesive member between a flexible display and a support plate.

According to an embodiment of the disclosure, it is possible to prevent foreign substances from entering a plurality of openings, by arranging a cover member to cover the plurality of openings of a support plate.

According to an embodiment of the disclosure, since a cover member disposed to cover a plurality of openings includes a plurality of recesses, air inside the plurality of openings may be discharged to outside of a foldable electronic device through the plurality of recesses.

Besides, various effects directly or indirectly obtained from the disclosure may be provided.

The methods according to the embodiments described in the claims or the specification of the disclosure may be implemented in software, hardware, or a combination of hardware and software.

In software implementation, a computer-readable storage medium storing one or more programs (software modules) may be provided. One or more programs stored in the computer-readable storage medium may be configured for execution by one or more processors of an electronic device. One or more programs may include instructions for controlling an electronic device to execute the methods according to the embodiments described in the claims or the specification of the disclosure.

Such a program (software module, software) may be stored to a random access memory, a non-volatile memory including a flash memory, a read only memory (ROM), an electrically erasable programmable ROM (EEPROM), a magnetic disc storage device, a CD-ROM, digital versatile discs (DVDs) or other optical storage devices, and a magnetic cassette. Alternatively, it may be stored to a memory combining part or all of them. In addition, a plurality of memories may be included.

Also, the program may be stored in an attachable storage device accessible via a communication network such as internet, intranet, local area network (LAN), wide LAN (WLAN), or storage area network (SAN), or a communication network by combining these networks. Such a storage device may access a device which executes an embodiment of the disclosure through an external port. In addition, a separate storage device on the communication network may access the device which executes an embodiment of the disclosure.

In the specific embodiments of the disclosure, the component included in the disclosure is expressed in a singular or plural form. However, the singular or plural expression is appropriately selected according to a proposed situation for the convenience of explanation, the disclosure is not limited to a single component or a plurality of components, the components expressed in the plural form may be configured as a single component, and the components expressed in the singular form may be configured as a plurality of components.

In addition, a term such as "unit" or "module" in the disclosure may be a hardware component such as a processor or a circuit, and/or a software component executed by a hardware component such as a processor.

"unit" and "module" may be stored in an addressable storage medium and implemented by a program executable by the processor. For example, "unit" and "module" may be implemented by components such as software components, object-oriented software components, class components and task components, processes, functions, attributes, procedures, sub-routines, segments of program code, drivers, firmware, microcode, circuit, data, databases, data structures, tables, arrays and variables.

Specific implementations described in this disclosure are merely embodiments, and are not intended to limit the scope of the disclosure in any way. For the sake of brevity of the specification, disclosure of conventional electronic configurations, control systems, software, and other functional aspects of the systems may be omitted.

In addition, in the disclosure, "including at least one of a, b, or c" may indicate "including a alone, including b alone, including c alone, including a and b, including b and c, including a and c, or including all of a, b, and c".

Meanwhile, while the specific embodiment has been described in the detailed explanation of the disclosure, it will be noted that various modifications may be made without departing from the scope of the disclosure. Therefore, the scope of the disclosure is not limited and defined by the described embodiment and is defined by not only the scope of the claims as below but also their equivalents.

It will be appreciated that all of the above-described embodiments, and their technical features, may be combined with one another in each and every combination, potentially unless there is a conflict between two embodiments or features. That is, each and every combination of two or more of the above-described embodiments is envisaged and included within the present disclosure. One or more features from any embodiment may be incorporated in any other embodiment, and provide a corresponding advantage or advantages.

## Claims

1. A foldable electronic device comprising:
a first housing;
a second housing;
a hinge assembly for rotatably connecting the first housing and the second housing;
a support plate disposed to cross the hinge assembly and disposed in the first housing and the second housing, the support plate comprising a first support portion, a second support portion and a central support portion interposed between the first support portion and the second support portion, the central support portion comprising a plurality of openings formed to pass through the central support portion;
a flexible display supported by the support plate; and
a cover member disposed between the hinge assembly and the support plate, and disposed to cover at least in part the central support portion,
wherein the cover member comprises a plurality of recesses formed to extend from a first side surface of the cover member to a second side surface which is opposite to the first side surface, and
the plurality of openings each is disposed to overlap at least one of the plurality of recesses, when viewed from a direction perpendicular to the support plate.

2. The foldable electronic device of claim 1, wherein an inner space in each of the plurality of openings is connected to at least one of spaces formed by the plurality of recesses.

3. The foldable electronic device of claim 2, wherein air in the inner space of each of the plurality of openings and air in the spaces formed by the plurality of recesses are discharged through at least one of the first side surface or the second side surface of the cover member.

4. The foldable electronic device of claim 1, further comprising:
a first adhesive member disposed between the flexible display and the support plate, and disposed to cover the plurality of openings,
wherein the cover member comprises,
a cushioning member; and
a second adhesive member interposed between the cushioning member and the support plate, and disposed to cover the plurality of openings, and
the plurality of recesses is formed on the cushioning member by the second adhesive member.

5. The foldable electronic device of claim 1, wherein the plurality of recesses is arranged on the cover member to be spaced apart from each other.

6. The foldable electronic device of claim 1, wherein the first side surface and the second side surface are parallel to an axial direction of the hinge assembly.

7. The foldable electronic device of claim 6, wherein the plurality of openings is formed to have a length extended along the axial direction of the hinge assembly, and
the plurality of openings is arranged to overlap in part, when viewed from a direction perpendicular to the first side surface and the second side surface.

8. The foldable electronic device of claim 1, wherein the plurality of recesses is formed to open from the first side surface to the second side surface.

9. The foldable electronic device of claim 8, wherein the cover member comprises a third side surface perpendicular to the first side surface and the second side surface, and
some of the plurality of recesses are formed to open from the first side surface to the third side surface.

10. The foldable electronic device of claim 1, wherein the plurality of recesses is spaced by a plurality of intervals, and
the plurality of intervals each is smaller than the length of the plurality of openings.

11. The foldable electronic device of claim 10, wherein the plurality of recesses has a plurality of lengths, and
the plurality of intervals each is smaller than the plurality of lengths of the plurality of openings.

12. The foldable electronic device of claim 1, wherein the plurality of recesses is arranged in parallel.

13. A foldable electronic device comprising:
a first housing;
a second housing;
a hinge assembly for rotatably connecting the first housing and the second housing;
a support plate disposed to cross the hinge assembly and disposed in the first housing and the second housing, the support plate comprising a first support portion, a second support portion and a central support portion interposed between the first support portion and the second support portion, the central support portion comprising a plurality of openings formed to pass through the central support portion;
a flexible display supported by the support plate;
a cushioning member interposed between the hinge assembly and the support plate, and disposed to cover at least in part the central support portion; and
an adhesive member interposed between the cushioning member and the support plate, and disposed to cover the plurality of openings,
wherein a plurality of recesses is formed on the cushioning member by the adhesive member.

14. The foldable electronic device of claim 13, wherein the cushioning member comprises a first side surface parallel to an axial direction of the hinge assembly and a second side surface opposite to the first side surface, and
the plurality of recesses is opened from the first side surface to the second side surface.

15. A foldable electronic device comprising:
a first housing;
a second housing;
a hinge assembly rotatably connecting the first housing and the second housing;
a support plate disposed to across the hinge assembly and disposed within the first housing and the second housing, wherein the support plate includes a first support portion, a second support portion, and a central support portion positioned between the first support portion and the second support portion, and wherein the central support portion includes a plurality of openings formed therethrough;
a flexible display supported by the support plate; and
a cover member disposed between the hinge assembly and the support plate and arranged to at least partially cover the central support portion,
wherein the cover member includes a plurality of segmented portions formed to extend from a first side of the cover member toward a second side opposite to the first side,
wherein the segmented portions are formed by an adhesive member disposed between the cover member and the support plate and arranged to cover the plurality of openings, and
wherein, when viewed in a direction perpendicular to the support plate, each of the plurality of openings is arranged to overlap with at least one of the plurality of segmented portions.
